# EUROPEAN PATENT APPLICATION

(11) **EP 4 596 622 A1**
(43) Date of publication of application: **06.08.2025**
(21) Application number: 23872274.8
(22) Date of filing: 25.09.2023
(51) Int. Cl.: C08L 33/04, C08F 8/42, C08K 5/057, C08K 5/19, C08L 101/10

(54) **CURABLE COMPOSITION**

(30) Priority: 30.09.2022 JP 2022158444
(71) Applicant: Kaneka Corporation, Osaka-shi, Osaka 530-8288 (JP)
(72) Inventor: YOKOTA, Daichi, Osaka 566-0072 (JP); YOSHIHASHI, Kenichi, Osaka 566-0072 (JP)
(74) Representative: Vossius & Partner Patentanwälte Rechtsanwälte mbB
(86) International application number: PCT/JP2023/034770
(87) International publication number: WO 2024/071051

(57) **Abstract**

A curable composition contains a (meth)acrylic ester polymer (A) having a reactive silicon group represented by the formula -Si(R¹)₃₋ₐXₐ, wherein R¹ groups are each independently a hydrocarbon group having 1 to 20 carbon atoms, the hydrocarbon group optionally has a heteroatom-containing group, X groups are each independently a hydroxy group or a hydrolyzable group, and a is 1, 2, or 3. The curable composition further contains a titanium compound (B) and an ammonium hydroxide (C) or a reaction product of the titanium compound (B) and the ammonium hydroxide (C).

## Description

### Technical Field

The present invention relates to a curable composition containing a reactive silicon group-containing (meth)acrylic ester polymer.

### Background Art

Polymers having reactive silicon groups are known as moisture-reactive polymers. Polymers of this kind are contained in many industrial products such as adhesives, sealing materials, coating materials, paints, and pressure-sensitive adhesives and used in diverse fields.

Known examples of polymer components of such reactive silicon group-containing polymers include various polymers whose backbone is a polyoxyalkylene polymer, a saturated hydrocarbon polymer, or a (meth)acrylic ester copolymer.

In the absence of any curing catalyst, such a reactive silicon group-containing polymer remains stable for a long period of time without any reaction of the silicon groups even when present together with water. As soon as a curing catalyst is mixed with the polymer, the polymer begins to undergo a curing reaction. A tin catalyst is often used as the curing catalyst; however, a catalyst other than tin catalysts is desired in some cases.

For example, titanium catalysts have been developed as catalysts other than tin catalysts (see Patent Literatures 1 and 2).

### Citation List

### Patent Literature

PTL 1: WO 2021/106942
PTL 2: WO 2021/106943

### Summary of Invention

### Technical Problem

An object of the present invention is to provide a curable composition that exhibits good curability and improved storage stability without using any tin catalyst.

### Solution to Problem

As a result of intensive studies with the goal of solving the above problem, the present inventors have completed the following invention.

That is, the present invention relates to a curable composition containing a reactive silicon group-containing (meth)acrylic ester polymer (A) having a reactive silicon group represented by the following formula (1):

-Si(R¹)₃₋ₐXₐ (1),

wherein R¹ groups are each independently a hydrocarbon group having 1 to 20 carbon atoms, the hydrocarbon group optionally has a heteroatom-containing group, X groups are each independently a hydroxy group or a hydrolyzable group, and a is 1, 2, or 3,
the curable composition further containing a titanium compound (B) and an ammonium hydroxide (C) or a reaction product of the titanium compound (B) and the ammonium hydroxide (C), the titanium compound (B) being represented by the following formula (2):

(R²-O)ₙTi-A₄₋ₙ (2),

wherein R² is a substituted or unsubstituted hydrocarbon group having 1 to 10 carbon atoms, n is an integer from 1 to 4, and A is a β-diketone group.

### Advantageous Effects of Invention

The present invention can provide a curable composition that exhibits good curability and improved storage stability without using any tin catalyst

### Description of Embodiments

Hereinafter, embodiments of the present invention will be described.

### <<Reactive Silicon Group-Containing (Meth)acrylic Ester Polymer (A)>>

A curable composition according to the present disclosure contains a reactive silicon group-containing (meth)acrylic ester polymer (A) (hereinafter also referred to as "polymer (A)").

### <Reactive Silicon Group>

The reactive silicon group-containing polyoxyalkylene polymer (A) has a reactive silicon group represented by the following formula (1):

-Si(R¹)₃₋ₐXₐ (1),

wherein R¹ groups are each independently a hydrocarbon group having 1 to 20 carbon atoms, the hydrocarbon group optionally has a heteroatom-containing group, X groups are each independently a hydroxy group or a hydrolyzable group, and a is 1, 2, or 3.

R¹ is a hydrocarbon group having 1 to 20 carbon atoms. The number of carbon atoms in the hydrocarbon group denoted by R¹ is preferably from 1 to 12, more preferably from 1 to 6, and particularly preferably from 1 to 4. The hydrocarbon group may be an unsubstituted hydrocarbon group or a substituted hydrocarbon group.

The heteroatom-containing group with which the hydrocarbon group denoted by R¹ may be substituted is a group containing a heteroatom. Any atom other than carbon and hydrogen atoms is defined herein as a heteroatom.

Suitable examples of the heteroatom include N, O, S, P, Si, and halogen atoms.

The total number of carbon atoms and heteroatoms in the heteroatom-containing group is preferably from 1 to 10, more preferably from 1 to 6, and even more preferably from 1 to 4.

Suitable examples of the heteroatom-containing group include: a hydroxy group; a mercapto group; halogen atoms such as Cl, Br, I, and F; a nitro group; a cyano group; alkoxy groups such as methoxy, ethoxy, n-propyloxy, and isopropyloxy groups; alkylthio groups such as methylthio, ethylthio, n-propylthio, and isopropylthio groups; acyl groups such as acetyl, propionyl, and butanoyl groups; acyloxy groups such as acetyloxy, propionyloxy, and butanoyloxy groups; substituted or unsubstituted amino groups such as amino, methylamino, ethylamino, dimethylamino, and diethylamino groups; substituted or unsubstituted aminocarbonyl groups such as aminocarbonyl, methylaminocarbonyl, ethylaminocarbonyl, dimethylaminocarbonyl, and diethylaminocarbonyl groups; and a cyano group.

When R¹ is a hydrocarbon group substituted with the heteroatom-containing group, the total number of carbon atoms and heteroatoms in R¹ is preferably from 2 to 30, more preferably from 2 to 18, even more preferably from 2 to 10, and particularly preferably from 2 to 6.

Specific examples of the hydrocarbon group having 1 to 20 carbon atoms which is denoted by R¹ include: alkyl groups such as methyl, ethyl, *n*-propyl, isopropyl, *n*-butyl, isobutyl, *sec*-butyl, *tert*-butyl, *n*-pentyl, *n*-hexyl, *n*-heptyl, *n*-octyl, 2-ethyl-*n*-hexyl, *n*-nonyl, *n*-decyl, *n*-undecyl, *n*-dodecyl, *n*-tridecyl, *n*-tetradecyl, *n*-pentadecyl, *n*-hexadecyl, *n*-octadecyl, *n*-nonadecyl, and *n*-icosyl groups; alkenyl groups such as vinyl, 2-propenyl, 3-butenyl, and 4-pentenyl groups; cycloalkyl groups such as cyclopropyl, cyclobutyl, cyclopentyl, cyclohexyl, cycloheptyl, and cyclooctyl groups; aryl groups such as phenyl, naphthalen-1-yl, naphthalen-2-yl, *o*-phenylphenyl group, *m*-phenylphenyl, and *p*-phenylphenyl groups; and aralkyl groups such as benzyl, phenethyl, (naphthalen-1-yl)methyl, and (naphthalen-2-yl)methyl groups.

These hydrocarbon groups substituted with the above-described heteroatom-containing group are also preferred as R¹.

Suitable examples of R¹ include: alkyl groups such as methyl and ethyl groups; alkyl groups having a heteroatom-containing group, such as chloromethyl and methoxymethyl groups; cycloalkyl groups such as a cyclohexyl group; aryl groups such as a phenyl group; and aralkyl groups such as a benzyl group. R¹ is preferably a methyl, methoxymethyl, or chloromethyl group, more preferably a methyl or methoxymethyl group, and even more preferably a methyl group.

The integer a is 1, 2, or 3. The integer a is preferably 2 or 3. In terms of the curability of the curable composition and the productivity in the production of the polymer (A), a is more preferably 2.

Examples of X include a hydroxy group, halogens, and alkoxy, acyloxy, ketoximate, amino, amide, acid amide, aminooxy, mercapto, and alkenyloxy groups. Among these, alkoxy groups are more preferred in terms of moderate hydrolyzability and ease of handling. In general, the smaller the number of carbon atoms in an alkoxy group is, the higher the reactivity of the alkoxy group is. That is, alkoxy groups are ranked in the following order of decreasing reactivity: methoxy, ethoxy, and propoxy groups. By making use of this characteristic, the specific structure of the reactive silicon group can be chosen as appropriate depending on the production method and the intended application of the (meth)acrylic ester polymer (A).

Specific examples of the reactive silicon group include dimethoxysilyl, trimethoxysilyl, diethoxysilyl, triethoxysilyl, triisopropoxysilyl, dimethoxymethylsilyl, diethoxymethylsilyl, and diisopropoxymethylsilyl groups. In terms of the curability of the curable composition, dimethoxymethylsilyl, diethoxymethylsilyl, trimethoxysilyl, and triethoxysilyl groups are preferred, and a dimethoxymethylsilyl group is particularly preferred.

The average number of the reactive silicon groups contained per molecule of the (meth)acrylic ester polymer (A) is preferably from 0.05 to 10, more preferably from 0.5 to 5, and particularly preferably from 1 to 3 in terms of the performance properties such as adhesion and tensile properties of a cured product of the composition.

The location of the reactive silicon group in the (meth)acrylic ester polymer (A) is not limited to a particular site, and the reactive silicon group may be located in a side chain of the polymer, at an end of the main chain of the polymer, and/or in the vicinity of the end of the main chain. In the case of designing a rubber material excellent in flexibility and elongation, it is preferable for the polymer to have the reactive silicon group at least at an end of the main chain.

The reactive silicon group-containing (meth)acrylic ester polymer (A) is a polymer having a structural unit derived from a (meth)acrylic ester monomer and a reactive silicon group. The polymer (A) can be obtained by polymerizing a monomer mixture containing a (meth)acrylic monomer and a vinyl monomer having a reactive silicon group. The term "(meth)acryl" as used herein means acryl and/or methacryl.

The (meth)acrylic monomer is a monomer having a (meth)acryloyl group in the molecule, and a typical example of the (meth)acrylic monomer is a (meth)acrylic alkyl ester. The (meth)acrylic monomer may include a vinyl monomer having a reactive silicon group as described above.

The amount of the (meth)acrylic monomer used is preferably from 10 to 100 wt%, more preferably from 30 to 100 wt%, and even more preferably from 50 to 100 wt% based on the total constituent monomers of the reactive silicon group-containing (meth)acrylic ester polymer (A).

Specific examples of the (meth)acrylic alkyl ester include (meth)acrylic alkyl esters having a linear or branched aliphatic alkyl group or an alicyclic alkyl group, such as methyl (meth)acrylate, ethyl (meth)acrylate, n-propyl (meth)acrylate, isopropyl (meth)acrylate, n-butyl (meth)acrylate, isobutyl (meth)acrylate, *tert*-butyl (meth)acrylate, *n*-pentyl (meth)acrylate, *n*-hexyl (meth)acrylate, cyclohexyl (meth)acrylate, methylcyclohexyl (meth)acrylate, *n*-heptyl (meth)acrylate, *n*-octyl (meth)acrylate, 2-ethylhexyl (meth)acrylate, *n*-nonyl (meth)acrylate, isononyl (meth)acrylate, decyl (meth)acrylate, undecyl (meth)acrylate, lauryl (meth)acrylate, tridecyl (meth)acrylate, tetradecyl (meth)acrylate, pentadecyl (meth)acrylate, hexadecyl (meth)acrylate, heptadecyl (meth)acrylate, stearyl (meth)acrylate, nonadecyl (meth)acrylate, eicosyl (meth)acrylate, heneicosyl (meth)acrylate, behenyl (meth)acrylate, tetracosyl (meth)acrylate, hexacosyl (meth)acrylate, octacosyl (meth)acrylate, triacontyl (meth)acrylate, dotriacontyl (meth)acrylate, tetratriacontyl (meth)acrylate, hexatriacontyl (meth)acrylate, octatriacontyl (meth)acrylate, tetracontyl (meth)acrylate, isodecyl (meth)acrylate, isoundecyl (meth)acrylate, isolauryl (meth)acrylate, isotridecyl (meth)acrylate, isotetradecyl (meth)acrylate, isopentadecyl (meth)acrylate, isohexadecyl (meth)acrylate, isoheptadecyl (meth)acrylate, isostearyl (meth)acrylate, isononadecyl (meth)acrylate, isoeicosyl (meth)acrylate, isoheneicosyl (meth)acrylate, isobehenyl (meth)acrylate, isotetracosyl (meth)acrylate, isohexacosyl (meth)acrylate, isooctacosyl (meth)acrylate, isotriacontyl (meth)acrylate, isodotriacontyl (meth)acrylate, isotetratriacontyl (meth)acrylate, isohexatriacontyl (meth)acrylate, isooctatriacontyl (meth)acrylate, and isotetracontyl (meth)acrylate. One or more of these (meth)acrylic alkyl esters may be used. Among the (meth)acrylic alkyl esters as listed above, (meth)acrylic alkyl esters having a linear or branched aliphatic alkyl group with 1 to 8 carbon atoms are preferred in terms of the mechanical properties of a cured product of the composition.

Examples of monomers other than the above (meth)acrylic alkyl esters include, but are not limited to: functional group-containing monomers such as 2-hydroxyethyl (meth)acrylate, 3-hydroxypropyl (meth)acrylate, 4-hydroxybutyl (meth)acrylate, glycidyl (meth)acrylate, 2-aminoethyl (meth)acrylate, and an ethylene oxide adduct of (meth)acrylic acid; aromatic (meth)acrylic esters such as phenyl (meth)acrylate, toluyl (meth)acrylate, and benzyl (meth)acrylate; alkoxyalkyl (meth)acrylates such as 2-methoxyethyl (meth)acrylate, 2-ethoxyethyl (meth)acrylate, and 3-methoxypropyl (meth)acrylate; fluorine-containing (meth)acrylic esters such as trifluoromethylmethyl (meth)acrylate, 2-trifluoromethylethyl (meth)acrylate, 2-perfluoroethylethyl (meth)acrylate, 2-perfluoroethyl-2-perfluorobutylethyl (meth)acrylate, 2-perfluoroethyl (meth)acrylate, perfluoromethyl (meth)acrylate, diperfluoromethylmethyl (meth)acrylate, 2-perfluoromethyl-2-perfluoroethylmethyl (meth)acrylate, 2-perfluorohexylethyl (meth)acrylate, 2-perfluorodecylethyl (meth)acrylate, 2-perfluorohexadecylethyl (meth)acrylate, perfluoroethylene, perfluoropropylene, and vinylidene fluoride; aromatic monomers such as styrene, vinyltoluene, α-methylstyrene, chlorostyrene, styrenesulfonic acid, and salts of styrenesulfonic acid; maleic anhydride; unsaturated dicarboxylic acids such as maleic acid and fumaric acid; monoalkyl and dialkyl esters of these unsaturated dicarboxylic acids; maleimide compounds such as maleimide, methylmaleimide, ethylmaleimide, propylmaleimide, butylmaleimide, hexylmaleimide, octylmaleimide, phenylmaleimide, and cyclohexylmaleimide; nitrile group-containing vinyl monomers such as acrylonitrile and methacrylonitrile; amide group-containing vinyl monomers such as acrylamide and methacrylamide; vinyl esters such as vinyl acetate, vinyl propionate, vinyl pivalate, vinyl benzoate, and vinyl cinnamate; alkenes such as ethylene and propylene; conjugated dienes such as butadiene and isoprene; vinyl chloride; vinylidene chloride; allyl chloride; and allyl alcohol. One or more of these monomers may be used.

The number-average molecular weight (Mn) of the reactive silicon group-containing (meth)acrylic ester polymer (A), as measured as a polystyrene-equivalent molecular weight by gel permeation chromatography (hereinafter also referred to as "GPC"), is preferably from 2,000 to 80,000 and more preferably from 8,000 to 60,000. When the Mn is 2,000 or more, the resulting cured product tends to have good weathering resistance. When the Mn is 80,000 or less, the curable composition tends to have good workability.

The viscosity of the reactive silicon group-containing (meth)acrylic ester polymer (A) is preferably from 0.5 to 1,000 Pa•s, more preferably from 5 to 800 Pa•s, and even more preferably from 20 to 500 Pa•s at 25°C. The reason why the viscosity is preferably 0.5 Pa•s or more is that in this case, the curable composition is likely to be prevented from sagging on a vertical surface when applied to the vertical surface. When the viscosity is 1,000 Pa•s or less, the curable composition tends to have good workability.

### <Methods for Producing Reactive Silicon Group-Containing (Meth)acrylic Ester Polymer (A)>

The following will describe methods for producing the reactive silicon group-containing (meth)acrylic ester polymer (A).

The reactive silicon group-containing (meth)acrylic ester polymer (A) can be produced by an ordinary radical polymerization method. For example, any method such as solution polymerization, bulk polymerization, dispersion polymerization, or high-temperature continuous polymerization may be employed. Alternatively, living radical polymerization, which is a recently developed technique, may be used. The reaction process may be a batch process, a semi-batch process, or a continuous polymerization process. Among the methods mentioned above, living radical polymerization is preferred.

High-temperature continuous polymerization may be performed according to a known method disclosed, for example, in Japanese Laid-Open Patent Application Publication No. S57-502171, Japanese Laid-Open Patent Application Publication No. S59-6207, or Japanese Laid-Open Patent Application Publication No. S60-215007. One example is a method in which: a pressurizable reactor is filled with a solvent and set to a given temperature under pressure; after that, a monomer mixture composed of monomers and optionally a polymerization solvent used as necessary is supplied to the reactor at a constant rate; and the polymerization solution is extracted from the reactor in an amount commensurate with the amount of the supplied monomer mixture. A polymerization initiator can be added to the monomer mixture as necessary. The amount of the polymerization initiator added is preferably from 0.001 to 2 parts by weight per 100 parts by weight of the monomer mixture. The pressure depends on the reaction temperature and the boiling points of the monomer mixture and solvent used and does not affect the reaction. The pressure may be any pressure under which the reaction temperature can be maintained. The residence time of the monomer mixture is preferably from 1 to 60 minutes. If the residence time is less than 1 minute, the monomers could fail to be fully reacted. If the residence time is more than 60 minutes, the productivity could decline. The residence time is more preferably from 2 to 40 minutes.

In general, uniform introduction of reactive silicon groups into a polymer leads to good curability of a curable composition containing the polymer and good physical properties such as high weathering resistance of the resulting cured product. In this regard, the use of living radical polymerization can yield a (meth)acrylic ester polymer having a relatively narrow molecular weight distribution and allows for flexible control of the number of reactive silicon groups in the molecular chain of the polymer and the locations of the reactive silicon groups in the molecular chain (whether each reactive silicon group is located in a side chain, at a molecular chain end, or in the vicinity of the molecular chain end).

The living radical polymerization to be employed is not limited to a particular type, and various polymerization methods can be used such as reversible addition-fragmentation chain transfer polymerization (RAFT polymerization), nitroxide-mediated radical polymerization (NMP), atom-transfer radical polymerization (ATRP), polymerization using an organotellurium compound (TERP), polymerization using an organoantimony compound (SBRP), polymerization using an organobismuth compound (BIRP), iodine transfer polymerization, reversible chain transfer catalyzed polymerization using an organic catalyst (RTCP), and reversible complexation-mediated polymerization (RCMP). Among these polymerization methods, RAFT polymerization, NMP, and ATRP are preferred in terms of polymerization controllability and ease of implementation.

In RAFT polymerization, the polymerization reaction proceeds in the presence of a given polymerization controlling agent (RAFT agent) and an ordinary free radical polymerization initiator while being controlled through a reversible chain transfer reaction. The RAFT agent used can be any of various known RAFT agents such as dithioester compounds, xanthate compounds, trithiocarbonate compounds, and dithiocarbamate compounds.

The RAFT agent used may be a monofunctional compound having only one active site or a difunctional or higher functional compound having two or more active sites. The amount of the RAFT agent used can be adjusted as appropriate depending on factors such as the types of the monomers used and the type of the RAFT agent.

The polymerization initiator used in RAFT polymerization can be a known radical polymerization initiator such as an azo compound, an organic peroxide, or a persulfuric acid salt. The polymerization initiator is preferably an azo compound since this compound is easy to handle in terms of safety and has a low risk of causing side reactions during radical polymerization.

Specific examples of the azo compound include 2,2'-azobisisobutyronitrile, 2,2'-azobis(2,4-dimethylvaleronitrile), 2,2'-azobis(4-methoxy-2,4-dimethylvaleronitrile), dimethyl-2,2'-azobis(2-methylpropionate), 2,2'-azobis(2-methylbutyronitrile), 1,1'-azobis(cyclohexane-1-carbonitrile), 2,2'-azobis[N-(2-propenyl)-2-methylpropionamide], and 2,2'-azobis(N-butyl-2-methylpropionamide).

One of the radical polymerization initiators as mentioned above may be used alone, or two or more thereof may be used in combination.

The proportion of the radical polymerization initiator used is not limited to a particular range. To obtain a polymer having a narrower molecular weight distribution, the amount of the radical polymerization initiator used per mol of the RAFT agent is preferably 0.5 mol or less and more preferably 0.2 mol or less. In terms of the stability of the polymerization reaction, the amount of the radical polymerization initiator used per mol of the RAFT agent is preferably at least 0.01 mol. Thus, the amount of the radical polymerization initiator used per mol of the RAFT agent is preferably from 0.01 to 0.5 mol and more preferably from 0.05 to 0.2 mol.

The reaction temperature in RAFT polymerization is preferably from 40 to 100°C, more preferably from 45 to 90°C, and even more preferably from 50 to 80°C. When the reaction temperature is 40°C or higher, the polymerization reaction can proceed smoothly. When the reaction temperature is 100°C or lower, side reactions can be inhibited, and restrictions on the choice of the initiator and solvent to be used can be eased.

In NMP, a given nitroxide compound such as an alkoxyamine compound having a nitroxide group is used as a living radical polymerization initiator, and the polymerization reaction proceeds through the mediation of a nitroxide radical derived from the nitroxide compound. The nitroxide compound is not limited to a particular type. The use of a nitroxide compound represented by the following formula (4) is preferred in terms of the polymerization controllability in polymerization of (meth)acrylic alkyl esters.

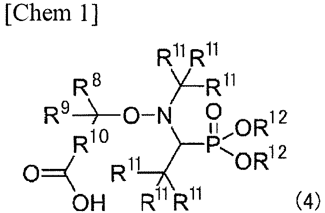

In this formula, R⁸ is an alkyl group having 1 to 2 carbon atoms or a hydrogen atom, R⁹ is an alkyl group having 1 to 2 carbon atoms or a nitrile group, R¹⁰ is -(CH₂)ₘ-, m is an integer from 0 to 2, and R¹¹ and R¹² are each an alkyl group having 1 to 4 carbon atoms.

Upon being heated at about 70 to about 80°C in the presence of a vinyl monomer, the nitroxide compound represented by the formula (4) undergoes first dissociation and an addition reaction with the vinyl monomer. When the vinyl monomer has two or more vinyl groups, the addition of the nitroxide compound to the vinyl monomer can give a polyfunctional polymerization precursor. The polymerization precursor is subsequently subjected to second dissociation under heating, and thus living polymerization of the vinyl monomer can be accomplished.

The amount of the nitroxide compound used is adjusted as appropriate depending on factors such as the types of the monomer used and the nitroxide compound.

In the case of producing a high-molecular-weight (meth)acrylic ester polymer by NMP, a nitroxide radical represented by the following formula (5) may be added in an amount of 0.001 to 0.2 mol per mol of the nitroxide compound of the formula (4).

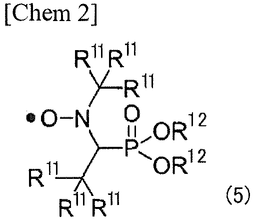

In this formula, R¹¹ and R¹² are each an alkyl group having 1 to 4 carbon atoms.

Adding the nitroxide radical of the formula (5) in an amount of 0.001 mol or more reduces the time taken for the concentration of the nitroxide radical to reach a steady state.

This allows for more precise control of the polymerization, leading to the obtained polymer having a narrower molecular weight distribution. If the amount of the nitroxide radical added is unnecessarily large, the polymerization could not take place. The amount of the nitroxide radical added per mol of the nitroxide compound is more preferably from 0.01 to 0.5 mol and even more preferably from 0.05 to 0.2 mol.

The reaction temperature in NMP is preferably from 50 to 140°C, more preferably from 60 to 130°C, even more preferably from 70 to 120°C, and particularly preferably from 80 to 120°C. When the reaction temperature is 50°C or higher, the polymerization reaction can proceed smoothly. When the reaction temperature is 140°C or lower, side reactions such as radical chain transfer tend to be inhibited.

In RTCP, an organic molecule having a chain transfer ability is used as a catalyst. The central atom of the catalyst is, for example, phosphorus, nitrogen, oxygen, or carbon. The catalyst is a compound containing iodine bonded to the central atom; for example, N-iodosuccinimide (NIS), in which iodine is bonded to nitrogen, is used as the catalyst. In RCMP, the catalyst used is an organic molecule such as a tertiary amine which coordinates with iodine of a protective group. The organic molecule coordinates with iodine of a dormant species and withdraws the iodine from the dormant species (the organic molecule acts as an activating agent), and in consequence a growing radical and a complex of iodine and the catalyst are reversibly formed. The catalyst used may be, for example, a tertiary amine which is a neutral molecule or a quaternary ammonium or phosphonium salt which is an organic salt. Examples of the catalyst are disclosed in Japanese Journal of Polymer Science and Technology, Vol. 72, No. 5 (2015). Methods for producing reactive silicon group-containing (meth)acrylic ester polymers by using these polymerization techniques are disclosed in Japanese Laid-Open Patent Application Publication No. 2022-075627 and Japanese Laid-Open Patent Application Publication No. 2022-075628.

Among living radical polymerization techniques, "atom-transfer radical polymerization" (so-called ATRP), in which a (meth)acrylic ester monomer is polymerized using an organic halogenated compound or a halogenated sulfonyl compound as an initiator and a transition metal complex as a catalyst, is more preferred as a method for producing a (meth)acrylic ester polymer having a given functional group. The reason is that not only does ATRP have the previously-described features of living radical polymerization but that ATRP gives a polymer terminated by a halogen or the like relatively useful for a functional group conversion reaction and allows for high flexibility in initiator design and catalyst design. ATRP is described, for example, in Matyjaszewski et al., Journal of the American Chemical Society (J.Am.Chem.Soc.), 1995, vol. 117, p. 5614.

In ATRP, the polymerization reaction is typically carried out using an organic halogenated compound as an initiator and a transition metal complex as a catalyst. The organic halogenated compound used as an initiator may be a monofunctional compound or a difunctional or higher functional compound. As for the type of the halogen, a bromide or a chloride is preferred. An example of production methods using atom-transfer radical polymerization is, but not limited to, a method disclosed in Japanese Laid-Open Patent Application Publication No. H9-272714.

Introduction of a reactive silicon group into the main chain of the (meth)acrylic ester polymer (A) may be accomplished using a known method.

For example, a (meth)acrylic ester polymer having a reactive silicon group in a side chain can easily be obtained by copolymerizing a (meth)acrylic monomer and a reactive silicon group-containing vinyl monomer. The reactive silicon group-containing vinyl monomer used can be a compound having a reactive silicon group and a polymerizable unsaturated group in the molecule.

Examples of the reactive silicon group-containing vinyl monomer include: reactive silicon group-containing vinylsilanes such as vinyltrimethoxysilane, vinyltriethoxysilane, vinylmethyldimethoxysilane, and vinyldimethylmethoxysilane; reactive silicon group-containing (meth)acrylic esters such as trimethoxysilylpropyl (meth)acrylate, triethoxysilylpropyl (meth)acrylate, dimethylmethoxysilylpropyl (meth)acrylate, and methyldimethoxysilylpropyl (meth)acrylate; reactive silicon group-containing vinyl ethers such as trimethoxysilylpropylvinyl ether; and reactive silicon group-containing vinyl esters such as vinyl trimethoxysilylundecanoate. One or more of these vinyl monomers can be used.

A reactive silicon group-containing (meth)acrylic ester polymer may be produced by copolymerizing any of the above monomers with another copolymerizable monomer.

When ATRP is carried out using a halogen compound having a reactive silicon group (or a functional group convertible to the reactive silicon group) as an initiator, a polymer can be obtained which has the reactive silicon group (or the functional group convertible to the reactive silicon group) at a polymer end on the polymerization initiation side.

In general, ATRP gives a polymer having a halogen group at a polymerization growth end. This halogen group may be converted to a functional group having a reactive silicon group by using a commonly known method.

As described above, the location of a reactive silicon group in the resulting polymer can be flexibly controlled to any site such as an end of the main chain of the polymer, the vicinity of the end of the main chain of the polymer, or a side chain of the polymer according to the intended purpose of the polymer by using a suitable method such as introduction of the reactive silicon group into the end of the main chain or copolymerization involving a vinyl monomer having the reactive silicon group.

A synthesis method called activators regenerated by electron transfer (ARGET), which is an improved version of ATRP, has also been reported (Macromolecules, 2006, 39, 39). In this method, the amount of a highly-oxidized transition metal complex responsible for delay or termination of polymerization is reduced by using a reductant. Thus, the polymerization can quickly achieve a high percentage of reaction even under low catalyst concentration conditions with a small amount of transition metal complex. ARGET can also be employed for production of the polymer (A).

### <<Titanium Compound (B)>>

The curable composition according to one aspect of the present disclosure can contain a titanium compound (B) represented by the following formula (2).

(R²-O)ₙTi-A₄₋ₙ (2),

wherein R² is a substituted or unsubstituted hydrocarbon group having 1 to 10 carbon atoms, n is an integer from 1 to 4, and A is a β-diketone group.

The substituted or unsubstituted hydrocarbon group denoted by R² is preferably a substituted or unsubstituted aliphatic or aromatic hydrocarbon group and more preferably an aliphatic hydrocarbon group. An example of the aliphatic hydrocarbon group is a saturated or unsaturated hydrocarbon group. The saturated hydrocarbon group is preferably a linear or branched alkyl group. The number of carbon atoms in the hydrocarbon group is from 1 to 10, preferably from 1 to 6, and more preferably from 1 to 4. Examples of the hydrocarbon group include methyl, ethyl, propyl, isopropyl, butyl, isobutyl, *sec*-butyl, *tert*-butyl*,* pentyl, hexyl, heptyl, octyl, 2-ethylhexyl, nonyl, and decyl groups. Examples of the substituent with which the hydrocarbon group may be substituted include methoxy, ethoxy, hydroxy, and acetoxy groups. Where there are two or more R² groups, they may be the same or different.

The β-diketone group denoted by A is not limited to a particular type and may be any β-diketone combinable with titanium. Examples of the β-diketone include: diketones such as 2,4-pentanedione, 2,4-hexanedione, 2,4-pentadecanedione, 2,2,6,6-tetramethyl-3,5-heptanedione, 1-aryl-1,3-butanediones such as 1-phenyl-1,3-butanedione and 1-(4-methoxyphenyl)-1,3-butanedione, 1,3-diaryl-1,3-propanediones such as 1,3-diphenyl-1,3-propanedione, 1,3-bis(2-pyridyl)-1,3-propanedione, and 1,3-bis(4-methoxyphenyl)-1,3-propanedione, and 3-benzyl-2,4-pentanedione; ketoesters such as methyl acetoacetate, ethyl acetoacetate, butyl acetoacetate, *t*-butyl acetoacetate, and ethyl 3-oxohexanoate; ketoamides such as *N,N*-dimethylacetoacetamide, *N,N*-diethylacetoacetamide, and acetoacetanilide; malonic esters such as dimethyl malonate, diethyl malonate, and diphenyl malonate; and malonamides such as *N,N,N',N'*-tetramethylmalonamide and *N,N,N',N'*-tetraethylmalonamide. Among these, diketones and ketoamides are preferred and diketones are more preferred. Specifically, 2,4-pentanedione, 1-aryl-1,3-butanediones, 1,3-diaryl-1,3-propanediones, methyl acetoacetate, and ethyl acetoacetate are preferred, and methyl acetoacetate and ethyl acetoacetate are particularly preferred. When there are two or more A groups, they may be the same or different.

The letter n denotes an integer from 1 to 4. To achieve better curability, n is preferably 2, 3, or 4 and particularly preferably 4.

Specific examples of the titanium compound of the formula (2) include: tetramethoxytitanium, trimethoxyethoxytitanium, trimethoxyisopropoxytitanium, trimethoxybutoxytitanium, dimethoxydiethoxytitanium, dimethoxydiisopropoxytitanium, dimethoxydibutoxytitanium, methoxytriethoxytitanium, methoxytriisopropoxytitanium, methoxytributoxytitanium, tetraethoxytitanium, triethoxyisopropoxytitanium, triethoxybutoxytitanium, diethoxydiisopropoxytitanium, diethoxydibutoxytitanium, ethoxytriisopropoxytitanium, ethoxytributoxytitanium, tetraisopropoxytitanium, triisopropoxybutoxytitanium, diisopropoxydibutoxytitanium, tetrabutoxytitanium, tetra(*tert*-butoxy)titanium, tetra(*sec*-butoxy)titanium, diisopropoxytitanium bis(acetylacetonate), diisopropoxytitanium bis(ethylacetoacetate), diisobutoxytitanium bis(acetylacetonate), and diisobutoxytitanium bis(ethylacetoacetate). In terms of catalytic activity, compound stability, and handleability, diisopropoxytitanium bis(acetylacetonate), diisopropoxytitanium bis(ethylacetoacetate), diisobutoxytitanium bis(acetylacetonate), diisobutoxytitanium bis(ethylacetoacetate), tetraisopropoxytitanium, tetrabutoxytitanium, tetra(*tert*-butoxy)titanium, and tetra(*sec*-butoxy)titanium are preferred. Particularly preferred are diisopropoxytitanium bis(ethylacetoacetate), diisobutoxytitanium bis(ethylacetoacetate), tetraisopropoxytitanium, and tetra(*tert*-butoxy)titanium.

One of the titanium compounds (B) as mentioned above may be used alone, or two or more thereof may be used in combination.

When the titanium compound (B) is used without being reacted with an ammonium hydroxide (C) beforehand, the amount of the titanium compound (B) is preferably from 0.1 to 20 parts by weight, more preferably from 0.2 to 10 parts by weight, and particularly preferably from 0.5 to 5 parts by weight per 100 parts by weight of the reactive silicon group-containing polymer (A).

### <<Ammonium Hydroxide (C)>>

The curable composition according to one aspect of the present disclosure can contain an ammonium hydroxide (C). The ammonium hydroxide (C) is preferably represented by the following formula (3).

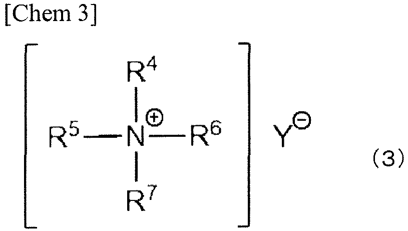

In this formula, R⁴, R⁵, R⁶, and R⁷ are the same or different and each independently a substituted or unsubstituted hydrocarbon group having 1 to 8 carbon atoms, and Y is a hydroxy group.

The substituted or unsubstituted hydrocarbon group denoted by R⁴, R⁵, R⁶, or R⁷ is preferably a substituted or unsubstituted aliphatic or aromatic hydrocarbon group and more preferably an aliphatic hydrocarbon group. The aliphatic hydrocarbon group is preferably a linear or branched alkyl group. The number of carbon atoms in the hydrocarbon group is from 1 to 8, preferably from 1 to 6, and more preferably from 1 to 4. Examples of the aliphatic hydrocarbon group include: saturated hydrocarbon groups such as methyl, ethyl, propyl, isopropyl, butyl, isobutyl, pentyl, hexyl, cyclohexyl, heptyl, and octyl groups; and unsaturated hydrocarbon groups such as vinyl, allyl, prenyl, crotyl, and cyclopentadienyl groups. Preferred are methyl, ethyl, and butyl groups.

Examples of the aromatic hydrocarbon group include phenyl, tolyl, and benzyl groups.

Examples of the substituent with which the hydrocarbon group may be substituted include methoxy, ethoxy, hydroxy, and acetoxy groups. Examples of the substituted hydrocarbon group include: alkoxyalkyl groups such as methoxymethyl, methoxyethyl, ethoxymethyl, and ethoxyethyl groups; hydroxyalkyl groups such as hydroxymethyl, hydroxyethyl, and 3-hydroxypropyl groups; and a 2-acetoxyethyl group.

Specific examples of the ammonium hydroxide of the formula (3) include: tetraalkylammonium hydroxides such as tetramethylammonium hydroxide, tetraethylammonium hydroxide, tetrapropylammonium hydroxide, and tetrabutylammonium hydroxide; trimethylbenzylammonium hydroxide; benzyltriethylammonium hydroxide, trimethylphenylammonium hydroxide, and tris(2-hydroxyethyl)methylammonium hydroxide. In particular, tetraalkylammonium hydroxides are preferred, and tetrabutylammonium hydroxide is more preferred.

When the titanium compound (B) and the ammonium hydroxide (C) are used without being reacted beforehand, the amount of the ammonium hydroxide (C) is preferably from 0.1 to 20 parts by weight, more preferably from 0.2 to 10 parts by weight, and particularly preferably from 0.5 to 5 parts by weight per 100 parts by weight of the reactive silicon group-containing polymer (A).

The content ratio of the titanium compound (B) to the ammonium hydroxide (C) (B/C), as expressed as a molar ratio, is from 0.1/1 to 10/1. In order to achieve good curability, the molar ratio is preferably from 1/1 to 10/1 and even more preferably from 2/1 to 5/1.

### <Reaction Product of Titanium Compound (B) and Ammonium Hydroxide (C)>

The curable composition according to the present disclosure may contain the titanium compound (B) and the ammonium hydroxide (C) individually or may contain a reaction product resulting from a reaction of the titanium compound (B) and the ammonium hydroxide (C). In either case, the curable composition can have good curability and at the same time exhibit improved storage stability. To further enhance the curability and the storage stability, it is preferable to use the reaction product.

The reaction product can be obtained, for example, by subjecting a mixture of the titanium compound (B) and the ammonium hydroxide (C) to a reaction at 40 to 100°C. To be specific, the reaction temperature is preferably from 40 to 100°C. The molar ratio of the titanium compound (B) to the ammonium hydroxide (C) in the mixture may be, for example, from 0.1 to 100 and is more preferably from 0.2 to 10.

The amount of the reaction product of the titanium compound (B) and the ammonium hydroxide (C) is preferably from 0.1 to 30 parts by weight, more preferably from 0.2 to 20 parts by weight, and particularly preferably from 0.5 to 10 parts by weight per 100 parts by weight of the reactive silicon group-containing polymer (A).

### <<Polymer (D) Having Reactive Silicon Group >>

The curable composition according to the present disclosure may contain only the (meth)acrylic ester polymer (A) as a reactive silicon group-containing polymer or may further contain a polymer (D) other than the polymer (A) and having a reactive silicon group.

The reactive silicon group of the polymer (D) can be represented by the formula (1) shown above. The reactive silicon group of the polymer (A) and the reactive silicon group of the polymer (D) may be the same silicon group or different silicon groups.

Specific examples of the reactive silicon group of the polymer (D) include, but are not limited to, trimethoxysilyl, triethoxysilyl, tris(2-propenyloxy)silyl, triacetoxysilyl, dimethoxymethylsilyl, diethoxymethylsilyl, dimethoxyethylsilyl, (chloromethyl)dimethoxysilyl, (chloromethyl)diethoxysilyl, (methoxymethyl)dimethoxysilyl, (methoxymethyl)diethoxysilyl, (N,N-diethylaminomethyl)dimethoxysilyl, and (*N,N*-diethylaminomethyl)diethoxysilyl groups. Among these, dimethoxymethylsilyl, trimethoxysilyl, triethoxysilyl, and (methoxymethyl)dimethoxysilyl groups are preferred in order to obtain a cured product having good mechanical properties. In terms of activity, trimethoxysilyl, (chloromethyl)dimethoxysilyl, and (methoxymethyl)dimethoxysilyl groups are more preferred. To enhance the curability, a trimethoxysilyl group is particularly preferred.

A specific example of the polymer (D) is, but not limited to, a reactive silicon group-containing polyoxyalkylene polymer. The main chain structure of the polyoxyalkylene polymer may be linear or branched.

The main chain of the reactive silicon group-containing polyoxyalkylene polymer is a polymer having a repeating unit represented by -R¹³-O- (wherein R¹³ is a linear or branched alkylene group having 1 to 14 carbon atoms), and R¹³ is more preferably a linear or branched alkylene group having 2 to 4 carbon atoms. Specific examples of the repeating unit represented by -R¹³-O- include -CH₂O-, -CH₂CH₂O-, -CH₂CH(CH₃)O-, -CH₂C(CH₃)(CH₃)O-, and -CH₂CH₂CH₂CH₂O-. Preferred are -CH₂CH₂O- and -CH₂CH(CH₃)O- and more preferred is -CH₂CH(CH₃)O-.

### <Method for Producing Reactive Silicon Group-Containing Polyoxyalkylene Polymer>

The following will describe a method for producing the reactive silicon group-containing polyoxyalkylene polymer.

The reactive silicon group-containing polyoxyalkylene polymer can be produced by introducing a reactive silicon group into a precursor polymer capable of reactive silicon group introduction. Specifically, the reactive silicon group-containing polyoxyalkylene polymer can be produced as follows: an olefin group is introduced into a hydroxy-terminated polyoxyalkylene polymer (d1) by making use of the reactivity of the terminal hydroxy group to obtain an olefin group-containing precursor polymer; and the precursor polymer is then reacted with a reactive silicon group-containing compound reactive with the olefin group to introduce a reactive silicon group into the polymer.

### (Polymerization)

The polymer backbone of the polyoxyalkylene polymer can be formed by polymerizing an epoxy compound with a hydroxy group-containing initiator by means of a conventionally known method. This polymerization gives the hydroxy-terminated polyoxyalkylene polymer (d1). The method for polymerization is not limited to a particular technique. A polymerization method using a double metal cyanide complex catalyst such as a zinc hexacyanocobaltate-glyme complex is preferred to obtain a hydroxy-terminated polymer having a low dispersity (Mw/Mn).

Examples of the hydroxy group-containing initiator include, but are not limited to, ethylene glycol, propylene glycol, glycerin, pentaerythritol, low-molecular-weight polyoxypropylene glycol, low-molecular-weight polyoxypropylene triol, butanol, allyl alcohol, methanol, ethanol, propanol, butanol, pentanol, hexanol, low-molecular-weight polyoxypropylene monoallyl ether, and low-molecular-weight polyoxypropylene monoalkyl ether. When it is desired to obtain a polymer having three or more main chain ends in the molecule, a compound such as glycerin, pentaerythritol, or low-molecular-weight polyoxypropylene triol, which has three or more hydroxy groups, can be used.

Examples of the epoxy compound include, but are not limited to: alkylene oxides such as ethylene oxide and propylene oxide; and glycidyl ethers such as methyl glycidyl ether and butyl glycidyl ether. Propylene oxide is preferred.

### (Reaction with Alkali Metal Salt)

In introduction of an olefin group into the hydroxy-terminated polyoxyalkylene polymer (dl), it is preferable to first convert the terminal hydroxy group to a metaloxy group by allowing an alkali metal salt to act on the polyoxyalkylene polymer (d1). A double metal cyanide complex catalyst may be used instead of the alkali metal salt. This reaction results in the formation of a metaloxy-terminated polyoxyalkylene polymer (d2).

Examples of the alkali metal salt include, but are not limited to, sodium hydroxide, sodium alkoxides, potassium hydroxide, potassium alkoxides, lithium hydroxide, lithium alkoxides, cesium hydroxide, and cesium alkoxides. In terms of ease of handling and solubility, sodium hydroxide, sodium methoxide, sodium ethoxide, sodium *tert*-butoxide, potassium hydroxide, potassium methoxide, potassium ethoxide, and potassium *tert*-butoxide are preferred, and more preferred are sodium methoxide and sodium *tert*-butoxide. In terms of availability, sodium methoxide is preferred. The alkali metal salt dissolved in a solvent may be used in the reaction.

### (Reaction with Electrophile (d3))

An olefin group-containing electrophile (d3) is allowed to act on the metaloxy-terminated polyoxyalkylene polymer (d2) obtained as described above; thus, the metaloxy group can be converted to a structure containing an olefin group. This reaction results in the formation of a polyoxyalkylene polymer (d4) having a terminal structure containing the olefin group.

The olefin group-containing electrophile (d3) is not limited to a particular compound and may be any compound that can react with the metaloxy group of the polyoxyalkylene polymer (d2) to introduce an olefin group into the polyoxyalkylene polymer. Examples of the electrophile (d3) include an olefin group-containing organic halogenated compound (d3-1) and an olefin group-containing epoxy compound (d3-2).

The olefin group-containing organic halogenated compound (d3-1), which is one form of the electrophile (d3), can undergo a halogen substitution reaction with the metaloxy group to form an ether bond and introduce an olefin group-containing terminal structure into the polyoxyalkylene polymer.

Specific examples of the olefin group-containing organic halogenated compound (d3-1) include, but are not limited to, vinyl chloride, allyl chloride, methallyl chloride, vinyl bromide, allyl bromide, methallyl bromide, vinyl iodide, allyl iodide, and methallyl iodide. In terms of ease of handling, allyl chloride and methallyl chloride are preferred. Methallyl chloride, methallyl bromide, and methallyl iodide are preferred to increase the average ratio of the number of reactive silicon groups to the number of the ends of the polymer backbone.

A carbon-carbon triple bond-containing halogenated hydrocarbon compound can also be used as the olefin group-containing organic halogenated compound (d3-1). A polyoxyalkylene polymer (d5) obtained through a reaction with such a compound has a carbon-carbon triple bond at an end of the polymer backbone. Introduction of a reactive silicon group into such a polymer (d5) leads to the result that the atom adjacent to the reactive silicon group has a carbon-carbon double bond.

Examples of the carbon-carbon triple bond-containing halogenated hydrocarbon compound include propargyl chloride, 1-chloro-2-butyne, 4-chloro-1-butyne, 1-chloro-2-octyne, 1-chloro-2-pentyne, 1,4-dichloro-2-butyne, 5-chloro-1-pentyne, 6-chloro-1-hexyne, propargyl bromide, 1-bromo-2-butyne, 4-bromo-1-butyne, 1-bromo-2-octyne, 1-bromo-2-pentyne, 1,4-dibromo-2-butyne, 5-bromo-1-pentyne, 6-bromo-1-hexyne, propargyl iodide, 1-iodo-2-butyne, 4-iodo-1-butyne, 1-iodo-2-octyne, 1-iodo-2-pentyne, 1,4-diiodo-2-butyne, 5-iodo-1-pentyne, and 6-iodo-1-hexyne. Among these, propargyl chloride, propargyl bromide, and propargyl iodide are more preferred. A halogenated hydrocarbon compound having a carbon-carbon double bond may be used together with the carbon-carbon triple bond-containing halogenated hydrocarbon compound.

The olefin group-containing epoxy compound (d3-2), which is another form of the electrophile (d3), can undergo an epoxy group ring-opening addition reaction with the metaloxy group to form an ether bond and introduce into the polyoxyalkylene polymer a terminal structure containing an olefin group and a hydroxy group. In the ring-opening addition reaction, one or more molecules of the epoxy compound (d3-2) can be added per metaloxy group by adjusting the amount of the epoxy compound (d3-2) relative to the metaloxy group or adjusting the reaction conditions.

Specific examples of the olefin group-containing epoxy compound (d3-2) include, but are not limited to, allyl glycidyl ether, methallyl glycidyl ether, glycidyl acrylate, glycidyl methacrylate, and butadiene monoxide, which are preferred in terms of reaction activity. Particularly preferred is allyl glycidyl ether.

When, as described above, the olefin group-containing epoxy compound (d3-2) is allowed to act on the metaloxy-terminated polyoxyalkylene polymer (d2), a metaloxy group is newly formed through ring opening of an epoxy group. Thus, the epoxy compound (d3-2) may be allowed to act on the polyoxyalkylene polymer (d2) first, and sequentially the resulting polymer may be reacted with the olefin group-containing organic halogenated compound (d3-1) described above.

### (Introduction of Reactive Silicon Group)

After the polyoxyalkylene polymer (d4) having a terminal structure containing an olefin group or the polyoxyalkylene polymer (d5) having a terminal structure containing a carbon-carbon triple bond (precursor polymer) is obtained as described above, the precursor polymer is subjected to a hydrosilylation reaction with a reactive silicon group-containing hydrosilane compound (d6). By the hydrosilylation reaction, a reactive silicon group can be introduced into the polymer. In this way, the reactive silicon group-containing polyoxyalkylene polymer is produced. The hydrosilylation reaction is advantageous in that the reaction is easy to carry out, that the amount of the reactive silicon group to be introduced can be easily adjusted, and that the resulting polymer has stable physical properties.

Specific examples of the reactive silicon group-containing hydrosilane compound (d6) include: halosilanes such as trichlorosilane, dichloromethylsilane, chlorodimethylsilane, dichlorophenylsilane, (chloromethyl)dichlorosilane, (dichloromethyl)dichlorosilane, bis(chloromethyl)chlorosilane, (methoxymethyl)dichlorosilane, (dimethoxymethyl)dichlorosilane, and bis(methoxymethyl)chlorosilane; alkoxysilanes such as trimethoxysilane, triethoxysilane, dimethoxymethylsilane diethoxymethylsilane, dimethoxyphenylsilane, ethyldimethoxysilane, methoxydimethylsilane, ethoxydimethylsilane, (chloromethyl)methylmethoxysilane, (chloromethyl)dimethoxysilane, (chloromethyl)diethoxysilane, bis(chloromethyl)methoxysilane, (methoxymethyl)methylmethoxysilane, (methoxymethyl)dimethoxysilane, bis(methoxymethyl)methoxysilane, (methoxymethyl)diethoxysilane, (ethoxymethyl)diethoxysilane, (3,3,3-trifluoropropyl)dimethoxysilane, (*N,N*-diethylaminomethyl)dimethoxysilane, (*N,N*-diethylaminomethyl)diethoxysilane, [(chloromethyl)dimethoxysilyloxy]dimethylsilane, [(chloromethyl)diethoxysilyloxy]dimethylsilane, [(methoxymethyl)dimethoxysilyloxy]dimethylsilane, [(methoxymethyl)diethoxysilyloxy]dimethylsilane, [(diethylaminomethyl)dimethoxysilyloxy]dimethylsilane, and [(3,3,3-trifluoropropyl)dimethoxysilyloxy]dimethylsilane; acyloxysilanes such as diacetoxymethylsilane and diacetoxyphenylsilane; ketoximatosilanes such as bis(dimethylketoximato)methylsilane and bis(cyclohexylketoximato)methylsilane; and isopropenyloxy silanes (deacetonated type) such as triisopropenyloxysilane, (chloromethyl)diisopropenyloxysilane, and (methoxymethyl)diisopropenyloxysilane.

The hydrosilylation reaction is preferably carried out in the presence of a hydrosilylation catalyst to accelerate the reaction. Known examples of the hydrosilylation catalyst include metals such as cobalt, nickel, iridium, platinum, palladium, rhodium, and ruthenium and complexes of these metals, and any of them can be used in the hydrosilylation reaction. Specific examples of the catalyst include: platinum supported on a support such as alumina, silica, or carbon black; chloroplatinic acid; a chloroplatinic acid complex composed of chloroplatinic acid and another compound such as an alcohol, an aldehyde, or a ketone; platinum-olefin complexes such as Pt(CH₂=CH₂)₂(PPh₃) and Pt(CH₂=CH₂)₂Cl₂; platinum-vinylsiloxane complexes such as Pt{(vinyl)Me₂SiOSiMe₂(vinyl)} and Pt{Me(vinyl)SiO}₄; platinum-phosphine complexes such as Pt(PPh₃)₄ and Pt(PBu₃)₄; and platinum-phosphite complexes such as Pt{P(OPh)₃}₄. Platinum catalysts such as chloroplatinic acid and platinum-vinylsiloxane complexes are preferred in terms of reaction efficiency.

Another method that can be used to produce the polymer (A) is a method in which a compound (d7) having a reactive silicon group and an isocyanate group in the molecule is allowed to act on the hydroxy-terminated polyoxyalkylene polymer (d1) (precursor polymer) to form a urethane bond and introduce the reactive silicon group into the polyoxyalkylene polymer. The polymer (A) can be produced by this method.

The compound (d7) having a reactive silicon group and an isocyanate group in the molecule is not limited to a particular compound and may be any compound that has in the molecule both a reactive silicon group and an isocyanate group capable of a urethanization reaction with the hydroxy group of the polyoxyalkylene polymer (d1). Specific examples of the compound (d7) include (3-isocyanatopropyl)trimethoxysilane, (3-isocyanatopropyl)dimethoxymethylsilane, (3-isocyanatopropyl)triethoxysilane, (3-isocyanatopropyl)diethoxymethylsilane, (isocyanatomethyl)trimethoxysilane, (isocyanatomethyl)triethoxysilane, (isocyanatomethyl)dimethoxymethylsilane, and (isocyanatomethyl)diethoxymethylsilane.

The urethanization reaction may be carried out without the use of any urethanization catalyst. In order to increase the reaction speed or reaction percentage, the urethanization reaction may be carried out in the presence of a urethanization catalyst. Examples of urethanization catalysts that can be used include conventionally known urethanization catalysts such as catalysts listed in Polyurethanes: Chemistry and Technology, Part I, Table 30, Chapter 4, Saunders and Frisch, Interscience Publishers, New York, 1963. Specific examples include, but are not limited to, base catalysts such as organotin compounds, bismuth compounds, and organic amines.

Yet another method that can be used to produce the reactive silicon group-containing polyoxyalkylene polymer is a method in which the hydroxy-terminated polyoxyalkylene polymer (dl) is reacted with an excessive amount of polyisocyanate compound (d8) to give an isocyanate-terminated polymer (precursor polymer) and then the precursor polymer is reacted with a compound (d9) having a reactive silicon group and a group (such as an amino group) reactive with the isocyanate group of the polymer. A polyoxyalkylene polymer having a reactive silicon group at an end of the polymer backbone can be produced by this method.

Examples of the polyisocyanate compound (d8) include: aromatic polyisocyanates such as toluene (tolylene) diisocyanate, diphenylmethane diisocyanate, and xylylene diisocyanate; and aliphatic polyisocyanates such as isophorone diisocyanate and hexamethylene diisocyanate.

Examples of the compound (d9) having a reactive silicon group and a group reactive with an isocyanate group include: amino group-containing silanes such as γ-aminopropyltrimethoxysilane, γ-aminopropyldimethoxymethylsilane, γ-aminopropyltriethoxysilane, *N*-(β-aminoethyl)-γ-aminopropyltrimethoxysilane, *N-*(β-aminoethyl)-γ-aminopropyldimethoxymethylsilane, *N*-(β-aminoethyl)-γ-aminopropyltriethoxysilane, γ-(*N*-phenyl)aminopropyltrimethoxysilane, γ-(*N*-phenyl)aminopropyldimethoxymethylsilane, *N*-ethylaminoisobutyltrimethoxysilane, *N*-ethylaminoisobutyldimethoxymethylsilane, *N*-cyclohexylaminomethyltrimethoxysilane, and *N*-cyclohexylaminomethyldimethoxymethylsilane; hydroxy group-containing silanes such as γ-hydroxypropyltrimethoxysilane and γ-hydroxypropyldimethoxymethylsilane; and mercapto group-containing silanes such as γ-mercaptopropyltrimethoxysilane and γ-mercaptopropyldimethoxymethylsilane.

Yet another method that can be used to produce the reactive silicon group-containing polyoxyalkylene polymer is a method in which a compound (d10) having a reactive silicon group and a mercaptan group in the molecule is allowed to act on the polyoxyalkylene polymer (d4) (precursor polymer) having a terminal structure containing an olefin group to form a sulfide bond through addition of the mercaptan group to the olefin group and introduce the reactive silicon group into the polyoxyalkylene polymer. A polyoxyalkylene polymer having a reactive silicon group at an end of the polymer backbone can be produced by this method.

The compound (d10) having a reactive silicon group and a mercaptan group in the molecule is not limited to a particular compound and may be any compound that has in the molecule both a reactive silicon group and a mercaptan group capable of an addition reaction with the olefin group of the polyoxyalkylene polymer (d4). Specific examples of the compound (d10) include (3-mercaptopropyl)methyldimethoxysilane, (3-mercaptopropyl)trimethoxysilane, (3-mercaptopropyl)methyldiethoxysilane, (3-mercaptopropyl)triethoxysilane, (mercaptomethyl)methyldimethoxysilane, (mercaptomethyl)trimethoxysilane, (mercaptomethyl)methyldiethoxysilane, and (mercaptomethyl)triethoxysilane.

The addition reaction of the mercaptan group with the olefin group may be carried out without the use of any radial initiator. In order to increase the reaction speed or reaction percentage, the addition reaction may be carried out in the presence of a radical initiator. The radical initiator used can be any conventionally known radical initiator. Specific examples include, but are not limited to, azo initiators and peroxide initiators.

Among known radical initiators preferred are catalysts having low activity for reactive silicon groups. In this respect, azo initiators are particularly preferred such as 2,2'-azobis(isobutyronitrile) (AIBN), 2,2'-azobis(2-methylbutyronitrile) (V-59), and 2,2'-azobis(1-methylcyclohexanecarbonitrile) (V-40).

The content ratio between the polymer (A) and the polymer (D) is not limited to a particular range and can be set as appropriate. In order to allow the curable composition to have good curability and at the same time exhibit improved storage stability with emphasis on the properties of the (meth)acrylic ester polymer (A), the weight percentage of the (meth)acrylic ester polymer (A) in the total weight of the (meth)acrylic ester polymer (A) and the polymer (D) is preferably 50% or more. The weight percentage of the (meth)acrylic ester polymer (A) may be more than 70%, more than 80%, or more than 95%. The weight percentage of the (meth)acrylic ester polymer (A) may be up to 100%.

### <<Curable Composition>>

The curable composition according to the present disclosure may contain additional components in addition to the reactive silicon group-containing polymer (A), the titanium compound (B), and the ammonium hydroxide (C), and examples of the additional components include another silanol condensation catalyst, a filler, an adhesion promoter, a plasticizer, a solvent, a diluent, an anti-sagging agent, an antioxidant, a light stabilizer, an ultraviolet absorber, a property modifier, a tackifying resin, an epoxy group-containing compound, a photocurable material, an oxygen-curable material, an epoxy resin, and another resin. If necessary, various additives may be added to the curable composition according to the present disclosure in order to adjust the physical properties of the curable composition or cured product. Examples of the additives include a surface modifier, a blowing agent, a curability modifier, a flame retardant, a silicate, a radical inhibitor, a metal deactivator, an antiozonant, a phosphorus-based peroxide decomposer, a lubricant, a pigment, and a fungicide.

### <Silanol Condensation Catalyst>

In the present invention, where the titanium compound (B) and the ammonium hydroxide (C) or a reaction product of the titanium compound (B) and the ammonium hydroxide (C) is used as a silanol condensation catalyst for hydrolysis and condensation of the reactive silicon groups of the reactive silicon group-containing polymer (A), another silanol condensation catalyst may be additionally used.

Examples of the other silanol condensation catalyst include an organotin compound, a metal carboxylate, an amine compound, a carboxylic acid, and an alkoxy metal.

Specific examples of the organotin compound include dibutyltin dilaurate, dibutyltin dioctanoate, dibutyltin bis(butyl maleate), dibutyltin diacetate, dibutyltin oxide, dibutyltin bis(acetylacetonate), dioctyltin bis(acetylacetonate), dioctyltin dilaurate, dioctyltin distearate, dioctyltin diacetate, dioctyltin oxide, a reaction product of dibutyltin oxide and a silicate compound, a reaction product of dioctyltin oxide and a silicate compound, and a reaction product of dibutyltin oxide and a phthalic ester.

Specific examples of the metal carboxylate include tin carboxylates, bismuth carboxylates, titanium carboxylates, zirconium carboxylates, iron carboxylates, potassium carboxylates, and calcium carboxylates. The metal carboxylate may be a combination of any of various carboxylic acids and any of various metals. Specific examples include iron 2-ethylhexanoate (divalent), iron 2-ethylhexanoate (trivalent), titanium 2-ethylhexanoate (tetravalent), vanadium 2-ethylhexanoate (trivalent), calcium 2-ethylhexanoate (divalent), potassium 2-ethylhexanoate (monovalent), barium 2-ethylhexanoate (divalent), manganese 2-ethylhexanoate (divalent), nickel 2-ethylhexanoate (divalent), cobalt 2-ethylhexanoate (divalent), zirconium 2-ethylhexanoate (tetravalent), iron neodecanoate (divalent), iron neodecanoate (trivalent), titanium neodecanoate (tetravalent), vanadium neodecanoate (trivalent), calcium neodecanoate (divalent), potassium neodecanoate (monovalent), barium neodecanoate (divalent), zirconium neodecanoate (tetravalent), iron oleate (divalent), iron oleate (trivalent), titanium oleate (tetravalent), vanadium oleate (trivalent), calcium oleate (divalent), potassium oleate (monovalent), barium oleate (divalent), manganese oleate (divalent), nickel oleate (divalent), cobalt oleate (divalent), zirconium oleate (tetravalent), iron naphthenate (divalent), iron naphthenate (trivalent), titanium naphthenate (tetravalent), vanadium naphthenate (trivalent), calcium naphthenate (divalent), potassium naphthenate (monovalent), barium naphthenate (divalent), manganese naphthenate (divalent), nickel naphthenate (divalent), cobalt naphthenate (divalent), and zirconium naphthenate (tetravalent).

Specific examples of the amine compound include: amines such as octylamine, 2-ethylhexylamine, laurylamine, and stearylamine; nitrogen-containing heterocyclic compounds such as pyridine, 1,8-diazabicyclo[5,4,0]undec-7-ene (DBU), and 1,5-diazabicyclo[4,3,0]non-5-ene (DBN); guanidines such as guanidine, phenylguanidine, and diphenylguanidine; biguanides such as butylbiguanide, 1-o-tolylbiguanide, and 1-phenylbiguanide; amino group-containing silane coupling agents; and ketimine compounds.

Specific examples of the carboxylic acid include acetic acid, propionic acid, butyric acid, 2-ethylhexanoic acid, lauric acid, stearic acid, oleic acid, linoleic acid, neodecanoic acid, and versatic acid.

Specific examples of the alkoxy metal include: aluminum compounds such as aluminum tris(acetylacetonate) and diisopropoxyaluminum ethyl acetoacetate; and zirconium compounds such as zirconium tetrakis(acetylacetonate).

Examples of other silanol condensation catalysts that can be used include fluorine anion-containing compounds, photoacid generators, and photobase generators.

Two or more different silanol condensation catalysts may be used in combination.

The amount of the silanol condensation catalyst used is preferably from 0.001 to 20 parts by weight, more preferably from 0.01 to 15 parts by weight, and particularly preferably from 0.01 to 10 parts by weight per 100 parts by weight of the reactive silicon group-containing polymer (A).

### <Filler>

The curable composition according to the present disclosure can contain any kind of filler. Examples of the filler include ground calcium carbonate, colloidal calcium carbonate, magnesium carbonate, diatomite, clay, talc, titanium oxide, fumed silica, precipitated silica, crystalline silica, molten silica, silicic anhydride, hydrated silicic acid, carbon black, ferric oxide, aluminum fines, zinc oxide, activated zinc oxide, PVC powder, PMMA powder, and glass fibers or filaments.

The amount of the filler used is preferably from 1 to 600 parts by weight and particularly preferably from 10 to 300 parts by weight per 100 parts by weight of the reactive silicon group-containing polymer (A).

Organic or inorganic balloons may be added to reduce the weight (or reduce the specific gravity) of the composition. Balloons are hollow spheres for use as a filler. Examples of the material of the balloons include inorganic materials such as glass, Shirasu, and silica and organic materials such as phenol resin, urea resin, polystyrene, and saran.

The amount of the balloons used is preferably from 0.1 to 100 parts by weight and particularly preferably from 1 to 20 parts by weight per 100 parts by weight of the reactive silicon group-containing polymer (A).

### <Adhesion Promoter>

An adhesion promoter can be added to the curable composition according to the present disclosure.

The adhesion promoter to be added can be a silane coupling agent or a reaction product of the silane coupling agent.

Specific examples of the silane coupling agent include: amino group-containing silanes such as γ-aminopropyltrimethoxysilane, γ-aminopropylmethyldimethoxysilane, *N-*β-aminoethyl-γ-aminopropyltrimethoxysilane, *N*-β-aminoethyl-γ-aminopropylmethyldimethoxysilane, *N*-phenyl-γ-aminopropyltrimethoxysilane, and (2-aminoethyl)aminomethyltrimethoxysilane; isocyanate group-containing silanes such as γ-isocyanatopropyltrimethoxysilane, γ-isocyanatopropyltriethoxysilane, γ-isocyanatopropylmethyldimethoxysilane, α-isocyanatomethyltrimethoxysilane, and α-isocyanatomethyldimethoxymethylsilane; mercapto group-containing silanes such as γ-mercaptopropyltrimethoxysilane, γ-mercaptopropyltriethoxysilane, and γ-mercaptopropylmethyldimethoxysilane; and epoxy group-containing silanes such as γ-glycidoxypropyltrimethoxysilane and β-(3,4-epoxycyclohexyl)ethyltrimethoxysilane.

Condensation products of various silane coupling agents can also be used such as a condensation product of an aminosilane and a condensation product of an aminosilane and another alkoxysilane. Reaction products of various silane coupling agents can also be used such as a reaction product of an aminosilane and an epoxysilane and a reaction product of an aminosilane and a (meth)acrylic group-containing silane. Specific examples of the condensation or reaction products include Dynasylan 1146 and Dynasylan 1124 (manufactured by EVONIK).

One of the adhesion promoters as mentioned above may be used alone or a mixture of two or more thereof may be used.

The amount of the silane coupling agent used is preferably from 0.1 to 20 parts by weight and particularly preferably from 0.5 to 10 parts by weight per 100 parts by weight of the reactive silicon group-containing polymer (A).

### <Plasticizer>

A plasticizer can be added to the curable composition according to the present disclosure. Specific examples of the plasticizer include: phthalic ester compounds such as dibutyl phthalate, diisononyl phthalate (DINP), diheptyl phthalate, di(2-ethylhexyl) phthalate, diisodecyl phthalate (DIDP), and butyl benzyl phthalate; terephthalic ester compounds such as bis(2-ethylhexyl)-1,4-benzenedicarboxylate; non-phthalic ester compounds such as 1,2-cyclohexanedicarboxylic acid diisononyl ester (a specific example is a product manufactured by BASF under the trade name "Hexamoll DINCH"); aliphatic polycarboxylic ester compounds such as dioctyl adipate, dioctyl sebacate, dibutyl sebacate, diisodecyl succinate, and tributyl acetylcitrate; unsaturated fatty acid ester compounds such as butyl oleate and methyl acetyl ricinoleate; alkylsulfonic phenyl esters (a specific example is a product manufactured by LANXESS under the trade name "Mesamoll"); phosphoric ester compounds; trimellitic ester compounds; chlorinated paraffin; hydrocarbon oils such as alkyl diphenyl and partially-hydrogenated terphenyl; process oil; and epoxy plasticizers such as epoxidized soybean oil and benzyl epoxystearate.

A polymeric plasticizer can also be used. Specific examples of the polymeric plasticizer include: vinyl polymers; polyester plasticizers; polyethers such as polyether polyols (e.g., polyethylene glycol and polypropylene glycol that have a number-average molecular weight of 500 or more) and derivatives resulting from conversion of the hydroxy groups of these polyether polyols to ester or ether groups; polystyrenes; polybutadiene; polybutene; polyisobutylene; butadiene-acrylonitrile; and polychloroprene.

The amount of the plasticizer used is preferably from 5 to 150 parts by weight, more preferably from 10 to 120 parts by weight, and particularly preferably from 20 to 100 parts by weight per 100 parts by weight of the reactive silicon group-containing polymer (A). If the amount of the plasticizer is less than 5 parts by weight, the plasticizer cannot exhibit its effect. If the amount of the plasticizer is more than 150 parts by weight, the cured product has insufficient mechanical strength. One plasticizer may be used alone or two or more plasticizers may be used in combination.

### <Solvent and Diluent>

A solvent or diluent can be added to the curable composition according to the present disclosure. The solvent or diluent used is not limited to a particular compound and may be an aliphatic hydrocarbon, an aromatic hydrocarbon, an alicyclic hydrocarbon, a halogenated hydrocarbon, an alcohol, an ester, a ketone, or an ether. When a solvent or diluent is used, the boiling point of the solvent or diluent is preferably 150°C or higher, more preferably 200°C or higher, and particularly preferably 250°C or higher to avoid air pollution during indoor use of the composition. One of the solvents or diluents as mentioned above may be used alone, or two or more thereof may be used in combination.

### <Anti-Sagging Agent>

An anti-sagging agent may, if necessary, be added to the curable composition according to the present disclosure to prevent sagging and improve workability. Examples of the anti-sagging agent include, but are not limited to, polyamide waxes, hydrogenated castor oil derivatives, and metallic soaps such as calcium stearate, aluminum stearate, and barium stearate. One of these anti-sagging agents may be used alone, or two or more thereof may be used in combination.

The amount of the anti-sagging agent used is preferably from 0.1 to 20 parts by weight per 100 parts by weight of the reactive silicon group-containing polymer (A).

### <Antioxidant>

An antioxidant (anti-aging agent) can be used in the curable composition according to the present disclosure. The use of the antioxidant can enhance the weathering resistance of the cured product. Examples of the antioxidant include hindered phenol antioxidants, monophenol antioxidants, bisphenol antioxidants, and polyphenol antioxidants.

Specific examples include BHT, Irganox 245, Irganox 1010, Irganox 1035, Irganox 1076, Irganox 1135, Irganox 1330, Irganox 1520, and SONGNOX 1076. The following hindered amine light stabilizers can also be used: Tinuvin 622LD, Tinuvin 144, Tinuvin 292, CHIMASSORB 944LD, and CHIMASSORB 119FL (all of which are manufactured by BASF); ADK STAB LA-57, ADK STAB LA-62, ADK STAB LA-67, ADK STAB LA-63, and ADK STAB LA-68 (all of which are manufactured by ADEKA Corporation); Sanol LS-2626, Sanol LS-1114, and Sanol LS-744 (all of which are manufactured by Sankyo Lifetech Co., Ltd.); and Nocrac CD (manufactured by Ouchi Shinko Chemical Industrial Co., Ltd.). Other antioxidants such as SONGNOX 4120, NAUGARD 445, and OKABEST CLX050 can also be used.

Specific examples of antioxidants are mentioned also in Japanese Laid-Open Patent Application Publication No. H4-283259 or Japanese Laid-Open Patent Application Publication No. H9-194731.

The amount of the antioxidant used is preferably from 0.1 to 10 parts by weight and particularly preferably from 0.2 to 5 parts by weight per 100 parts by weight of the reactive silicon group-containing polymer (A).

### <Light Stabilizer>

A light stabilizer can be used in the curable composition according to the present disclosure. The use of the light stabilizer can prevent photooxidative degradation of the cured product. Examples of the light stabilizer include benzotriazole, hindered amine, and benzoate compounds. Particularly preferred are hindered amine compounds.

Examples of hindered amine light stabilizers include: Tinuvin 123, Tinuvin 144, Tinuvin 249, Tinuvin 292, Tinuvin 312, Tinuvin 622LD, Tinuvin 765, Tinuvin 770, Tinuvin 880, Tinuvin 5866, Tinuvin B97, CHIMASSORB 119FL, and CHIMASSORB 944LD (all of which are manufactured by BASF); ADK STAB LA-57, LA-62, LA-63, LA-67, and LA-68 (all of which are manufactured by ADEKA Corporation); Sanol LS-292, LS-2626, LS-765, LS-744, and LS-1114 (all of which are manufactured by Sankyo Lifetech Co., Ltd.); SABOSTAB UV91, SABOSTAB UV119, SONGSORB CS5100, SONGSORB CS622, and SONGSORB CS944 (all of which are manufactured by SONGWON); and Nocrac CD (manufactured by Ouchi Shinko Chemical Industrial Co., Ltd.).

The amount of the light stabilizer used is preferably from 0.1 to 10 parts by weight and particularly preferably from 0.2 to 5 parts by weight per 100 parts by weight of the reactive silicon group-containing polymer (A).

### <Ultraviolet Absorber>

An ultraviolet absorber can be used in the curable composition according to the present disclosure. The use of the ultraviolet absorber can enhance the surface weathering resistance of the cured product. Examples of the ultraviolet absorber include benzophenone, benzotriazole, salicylate, triazine, substituted acrylonitrile, and metal chelate compounds. Particularly preferred are benzotriazole compounds. Examples include: Tinuvin 234, Tinuvin 326, Tinuvin 327, Tinuvin 328, Tinuvin 329, Tinuvin 350, Tinuvin 571, Tinuvin 900, Tinuvin 928, Tinuvin 1130, and Tinuvin 1600 (all of which are manufactured by BASF); and SONGSORB 3290 (manufactured by SONGWON). Examples of triazine compounds include: Tinuvin 400, Tinuvin 405, Tinuvin 477, and Tinuvin 1577ED (all of which are manufactured by BASF); and SONGSORB CS400 and SONGSORB 1577 (manufactured by SONGWON). Examples of benzophenone compounds include SONGSORB 8100 (manufactured by SONGWON).

The amount of the ultraviolet absorber used is preferably from 0.1 to 10 parts by weight and particularly preferably from 0.2 to 5 parts by weight per 100 parts by weight of the reactive silicon group-containing polymer (A).

Addworks IBC760 (manufactured by Clariant) can also be used which is a product combining an antioxidant, a light stabilizer, and an ultraviolet absorber.

### <Property Modifier>

A property modifier may, if necessary, be added to the curable composition according to the present disclosure in order to adjust the tensile properties of the resulting cured product. Examples of the property modifier include, but are not limited to: alkylalkoxysilanes such as phenoxytrimethylsilane, methyltrimethoxysilane, dimethyldimethoxysilane, trimethylmethoxysilane, and n-propyltrimethoxysilane; arylalkoxysilanes such as diphenyldimethoxysilane and phenyltrimethoxysilane; alkylisopropenoxysilanes such as dimethyldiisopropenoxysilane, methyltriisopropenoxysilane, and γ-glycidoxypropylmethyldiisopropenoxysilane; trialkylsilyl borates such as tris(trimethylsilyl) borate and tris(triethylsilyl) borate; silicone varnishes; and polysiloxanes. The use of the property modifier can increase the hardness of the cured product of the curable composition according to the present disclosure or conversely decrease the hardness and increase the elongation at break of the cured product. One of the property modifiers as mentioned above may be used alone, or two or more thereof may be used in combination.

In particular, a compound hydrolyzable to form a compound having a monovalent silanol group in the molecule has the advantage of decreasing the modulus of the cured product without aggravating the stickiness of the surface of the cured product. Particularly preferred is a compound the hydrolysis of which gives trimethylsilanol. Examples of the compound hydrolyzable to form a compound having a monovalent silanol group in the molecule include silicon compounds which are derivatives of alcohols such as hexanol, octanol, phenol, trimethylolpropane, glycerin, pentaerythritol, and sorbitol and the hydrolysis of which gives monosilanols. Specific examples include phenoxytrimethylsilane and tris((trimethylsiloxy)methyl)propane.

The amount of the property modifier used is preferably from 0.1 to 10 parts by weight and particularly preferably from 0.5 to 5 parts by weight per 100 parts by weight of the reactive silicon group-containing polymer (A).

### <Tackifying Resin>

A tackifying resin can, if necessary, be added to the curable composition of the present invention for the purpose of enhancing the bond strength or adhesion to a substrate or any other purpose. The tackifying resin is not limited to a particular resin and may be a commonly used tackifying resin.

Specific examples of the tackifying resin include terpene resins, aromatic modified terpene resins, hydrogenated terpene resins, terpene-phenol resins, phenol resins, modified phenol resins, xylene-phenol resins, cyclopentadiene-phenol resins, coumarone-indene resins, rosin resins, rosin ester resins, hydrogenated rosin ester resins, xylene resins, low-molecular-weight polystyrene resins, styrene copolymer resins, styrene block copolymers, hydrogenated styrene block copolymers, petroleum resins (such as C5 hydrocarbon resins, C9 hydrocarbon resins, and C5-C9 hydrocarbon copolymer resins), hydrogenated petroleum resins, and DCPD resins. One of these resins may be used alone, or two or more thereof may be used in combination.

The amount of the tackifying resin used is preferably from 2 to 100 parts by weight, more preferably from 5 to 50 parts by weight, and even more preferably from 5 to 30 parts by weight per 100 parts by weight of the reactive silicon group-containing polymer (A). If the amount of the tackifying resin is less than 2 parts by weight, the tackifying resin is likely to fail to exhibit the enhancing effect on the bond strength or adhesion to a substrate. If the amount of the tackifying resin is more than 100 parts by weight, the composition could have too high a viscosity and be difficult to handle.

### <Epoxy Group-Containing Compound>

An epoxy group-containing compound can be used in the curable composition according to the present disclosure. The use of the epoxy group-containing compound can enhance the recovery performance of the cured product. Examples of the epoxy group-containing compound include epoxidized unsaturated fats and oils, epoxidized unsaturated fatty acid esters, alicyclic epoxy compounds, epichlorohydrin derivatives, and mixtures of the derivatives. Specific examples include epoxidized soybean oil, epoxidized linseed oil, bis(2-ethylhexyl)-4,5-epoxycyclohexane-1,2-dicarboxylate (E-PS), epoxy octyl stearate, and epoxy butyl stearate. It is recommended to use the epoxy compound in an amount of 0.5 to 50 parts by weight per 100 parts by weight of the reactive silicon group-containing polymer (A).

### <Photocurable Material>

A photocurable material can be used in the curable composition according to the present disclosure. The use of the photocurable material can lead to the formation of a coating of the photocurable material on the surface of the cured product, resulting in reduction in the stickiness of the cured product or enhancement of the weathering resistance of the cured product. A wide variety of such compounds are known, including organic monomers, oligomers, resins, and compositions containing them. Typical examples of photocurable materials that can be used include: an unsaturated acrylic compound which is a monomer or an oligomer having one or more unsaturated acrylic or methacrylic groups or a mixture of the monomer and oligomer; polyvinyl cinnamates; and azide resins.

It is recommended to use the photocurable material in an amount of 0.1 to 20 parts by weight, preferably in an amount of 0.5 to 10 parts by weight, per 100 parts by weight of the reactive silicon group-containing polymer (A). If the amount of the photocurable material is 0.1 parts by weight or less, the photocurable material cannot exhibit the enhancing effect on the weathering resistance. If the amount of the photocurable material is 20 parts by weight or more, the cured product tends to be extremely hard and prone to cracking.

### <Oxygen-Curable Material>

An oxygen-curable material can be used in the curable composition according to the present disclosure. Examples of the oxygen-curable material include unsaturated compounds reactive with oxygen in the air. The oxygen-curable material reacts with oxygen in the air to form a cured coating in the vicinity of the surface of the cured product, thus offering benefits such as preventing the surface of the cured product from being sticky and preventing deposition of dirt and dust on the surface of the cured product. Specific examples of the oxygen-curable material include: drying oils exemplified by tung oil and linseed oil; various alkyd resins obtained by modification of the drying oil compounds; drying oil-modified acrylic polymers, epoxy resins, and silicone resins; and liquid polymers such as 1,2-polybutadiene, 1,4-polybutadiene, and C5 to C8 diene polymers which are obtained by polymerization or copolymerization of diene compounds such as butadiene, chloroprene, isoprene, and 1,3-pentadiene. One of these materials may be used alone, or two or more thereof may be used in combination.

It is recommended to use the oxygen-curable material in an amount of 0.1 to 20 parts by weight, more preferably in an amount of 0.5 to 10 parts by weight, per 100 parts by weight of the reactive silicon group-containing polymer (A). If the amount of the oxygen-curable material is less than 0.1 parts by weight, the oxygen-curable material fails to exhibit a sufficient improving effect on the soil resistance of the cured product. If the amount of the oxygen-curable material is more than 20 parts by weight, the cured product tends to suffer from a deterioration in the properties such as tensile properties. As taught in Japanese Laid-Open Patent Application Publication No. H3-160053, it is recommended to use the oxygen-curable material in combination with a photocurable material.

### <Epoxy Resin>

An epoxy resin can also be used in the curable composition according to the present disclosure. The composition containing an added epoxy resin is preferred for use as an adhesive, in particular an adhesive for exterior wall tiles. Examples of the epoxy resin include bisphenol A epoxy resins and novolac epoxy resins.

The proportions of the epoxy resin used and the reactive silicon group-containing polymer (A) are such that the polymer (A)/epoxy resin weight ratio is from 100/1 to 1/100. If the polymer (A)/epoxy resin weight ratio is less than 1/100, the cured product of the epoxy resin is less likely to enjoy an enhancing effect on the impact resistance or toughness. If the polymer (A)/epoxy resin weight ratio is more than 100/1, the cured product of the polymer has insufficient strength.

When the epoxy resin is added to the curable composition according to the present disclosure, a curing agent for curing the epoxy resin can also be used in the curable composition. The epoxy resin-curing agent used is not limited to a particular material and may be a commonly used epoxy resin-curing agent.

When a curing agent for curing the epoxy resin is used, the amount of the curing agent is from 0.1 to 300 parts by weight per 100 parts by weight of the epoxy resin.

### <<Preparation of Curable Composition>>

The curable composition according to the present disclosure can be prepared as a one-part composition all the components of which are blended together and hermetically stored and which, when applied to any object, cures under the action of moisture in the air. The curable composition may be prepared as a two-part composition consisting of an organic polymer composition and a curing agent blend which is prepared separately from the organic polymer composition by blending components such as a curing catalyst, a filler, a plasticizer, and water. In the case of this two-part composition, the organic polymer composition and the curing agent blend are mixed before use. In terms of workability, it is preferable to prepare the curable composition as a one-part composition.

In the case where the curable composition is a one-part composition, all the components are blended together beforehand. Thus, it is preferable that a water-containing component be dried to remove water before use or dehydrated by means such as pressure reduction during blending or kneading. The storage stability of the curable composition can be further improved by not only performing the drying/dehydration but also adding an alkoxysilane compound such as *n*-propyltrimethoxysilane, vinyltrimethoxysilane, phenyltrimethoxysilane, vinylmethyldimethoxysilane, γ-mercaptopropylmethyldimethoxysilane, γ-mercaptopropylmethyldiethoxysilane, or γ-glycidoxypropyltrimethoxysilane.

The amount of the dehydrating agent used, in particular the silicon compound such as vinyltrimethoxysilane reactive with water, is from 0.1 to 20 parts by weight and preferably from 0.5 to 10 parts by weight per 100 parts by weight of the reactive silicon group-containing polymer (A).

### <<Applications>>

The curable composition according to the present disclosure can be used, for example, as a pressure-sensitive adhesive, a sealing material for buildings, ships, automobiles, or roads, an adhesive, a waterproofing material, a coating-waterproofing material, a mold making material, a vibration-isolating material, a vibration-damping material, a soundproofing material, a foam material, a paint, or a spray material. A cured product obtained by curing the curable composition according to the present disclosure is superior in flexibility and adhesion. As such, the curable composition is more preferably used as a sealing material or an adhesive.

The curable composition can be used in diverse applications, including: a material for use in an electrical or electronic part, such as a sealant for the back side of a solar cell; an electrical insulating material for an electrical or electronic part or device, such as an insulating sheath material for an electric wire or a cable; an acoustic insulating material; an elastic adhesive; a binder; a contact adhesive; a spray-type sealing material; a crack-repairing material; an adhesive for tile laying; an adhesive for an asphalt-waterproofing material; a powder paint; a cast molding material; a rubber material for medical purposes; a pressure-sensitive adhesive for medical purposes; a pressure-sensitive adhesive sheet for medical purposes; a medical device sealing material; a dental impression material; a food packaging material; a joint sealing material for exterior cladding such as siding board; a coating material; an anti-skid covering material; a buffer material; a primer; an electrically conductive material for electromagnetic wave shielding; a thermally conductive material; a hot-melt material; a potting agent for electrical or electronic purposes; a film; a gasket; a concrete-reinforcing material; an adhesive for temporary bonding; any kind of molding material; a rust-proofing or waterproofing sealant for an edge face (cut edge) of wire glass or laminated glass; and a liquid sealing material for use in industrial parts such as parts of automobiles, large vehicles (e.g., cargo trucks and buses), railroad cars, aircrafts, ships, electric machines, and various other machines. For example, in an automobile, the curable composition can be used for diverse purposes, such as for adhesive mounting of various parts such as a plastic cover, a trim, a flange, a bumper, a window, and interior and exterior parts. Furthermore, the curable composition can, alone or with the help of a primer, adhere closely to a wide variety of substrates such as glass, porcelain, wood, metal, and a resin molded article, and thus can be used as any of various types of sealing compositions and adhesive compositions. Additionally, the curable composition according to the present disclosure can be used as an adhesive for interior panels, an adhesive for exterior panels, an adhesive for tile laying, an adhesive for stone laying, an adhesive for ceiling finishing, an adhesive for floor finishing, an adhesive for wall finishing, an adhesive for vehicle panels, an adhesive for assembly of electrical, electronic, or precision equipment, an adhesive for bonding of leather, fiber products, fabric, paper, plates, or rubber, a reactive postcuring pressure-sensitive adhesive, a sealing material for direct glazing, a sealing material for double-glazed glass, a sealing material for SSG, a sealing material for working joints of buildings, or a material for civil engineering or bridge construction. The curable composition can be used also as a pressure-sensitive adhesive material such as a pressure-sensitive adhesive tape or sheet.

In the following items, preferred aspects of the present disclosure are listed. The present invention is not limited to the following items.

### [Item 1]

A curable composition containing a reactive silicon group-containing (meth)acrylic ester polymer (A) having a reactive silicon group represented by the following formula (1):

-Si(R¹)₃₋ₐXₐ (1),

wherein R¹ groups are each independently a hydrocarbon group having 1 to 20 carbon atoms, the hydrocarbon group optionally has a heteroatom-containing group, X groups are each independently a hydroxy group or a hydrolyzable group, and a is 1, 2, or 3,
the curable composition further containing a titanium compound (B) and an ammonium hydroxide (C) or a reaction product of the titanium compound (B) and the ammonium hydroxide (C), the titanium compound (B) being represented by the following formula (2):

(R²-O)ₙTi-A₄₋ₙ (2),

wherein R² is a substituted or unsubstituted hydrocarbon group having 1 to 10 carbon atoms, n is an integer from 1 to 4, and A is a β-diketone group.

### [Item 2]

The curable composition according to item 1, wherein a is 2 in the formula (1).

### [Item 3]

The curable composition according to item 1 or 2, wherein the reactive silicon group is a dimethoxymethylsilyl group.

### [Item 4]

The curable composition according to any one of items 1 to 3, wherein the (meth)acrylic ester polymer (A) has the reactive silicon group at least at an end of a main chain of the (meth)acrylic ester polymer (A).

### [Item 5]

The curable composition according to any one of items 1 to 4, further containing a polymer (D) other than the (meth)acrylic ester polymer (A), the polymer (D) having a reactive silicon group, wherein
a weight percentage of the (meth)acrylic ester polymer (A) in a total weight of the (meth)acrylic ester polymer (A) and the polymer (D) is 50% or more.

### [Item 6]

A cured product resulting from curing of the curable composition according to any one of items 1 to 5.

### Examples

Hereinafter, the present invention will be specifically described using examples. The examples given below are not intended to limit the present invention.

The number-average molecular weights mentioned in the examples are GPC molecular weights measured under the following conditions.
Delivery system: e2695 manufactured by Waters
Columns: Shodex GPC K-804 and K-802.5 manufactured by Showa Denko K.K.
Solvent: Chloroform
Molecular weight: Polystyrene equivalent
Measurement temperature: 40°C

The average number of reactive silicon groups per polymer molecule was calculated based on the structure of the polymer and the result of NMR analysis.

### (Synthesis Example 1)

Butyl acrylate (98.3 parts by weight) was polymerized in an acetonitrile solvent at about 80 to 90°C using diethyl 2,5-dibromoadipate (1.7 parts by weight) as an initiator, cuprous bromide (0.82 parts by weight) as a catalyst, and pentamethyldiethylenetriamine as a catalyst ligand. This polymerization yielded a polyacrylic ester terminated at both ends by bromine groups. The polymerization reaction speed was controlled as appropriate by the amount of pentamethyldiethylenetriamine. Subsequently, the terminal bromine groups of the polymer and 1,7-octadiene were reacted in an acetonitrile solvent using a cuprous bromide-pentamethyldiethylenetriamine complex as a catalyst to obtain a polyacrylic ester. The amount of 1,7-octadiene was 40 molar equivalents per molar equivalent of the initiator. After the reaction, 1,7-octadiene remaining unreacted was removed by evaporation. The obtained polymer was purified by means of an adsorbent, and the purified polymer was debrominated by heating to about 190°C. The resulting polymer was purified again by means of an adsorbent to obtain a polyacrylic ester terminated at both ends by alkenyl groups.

To the obtained polyacrylic ester terminated at both ends by alkenyl groups was added 300 ppm of an isopropanol solution containing a platinum-vinylsiloxane complex as a catalyst and having a platinum content of 3 wt%, and methyldimethoxysilane was hydrosilylated with the alkenyl groups of the polyacrylic ester. The reaction temperature was 100°C and the reaction time was 1 hour. The reaction was carried out in the presence of methyl orthoformate, and the amount of methyldimethoxysilane was 2 molar equivalents per molar equivalent of the alkenyl groups. After the reaction, methyldimethoxysilane and methyl orthoformate remaining unreacted were removed by evaporation to obtain a methyldimethoxysilyl-terminated polyacrylic ester. The obtained polymer had a number-average molecular weight of 25,000 and a dispersity of 1.3, and the number of silyl groups introduced per molecule was 2.0.

### (Synthesis Example 2) Catalyst (B-1)

A 500-mL four-necked round-bottom flask fitted with a nitrogen inlet tube was charged with 85.2 g (0.3 mol) of tetraisopropoxytitanium (manufactured by Tokyo Chemical Industry Co., Ltd.), and 70 g (0.1 mol) of a 37% methanol solution (manufactured by Tokyo Chemical Industry Co., Ltd.) of tetrabutylammonium hydroxide (hereinafter referred to as "TBAH") was added dropwise under stirring at an internal temperature of 60°C over 30 minutes, after which the stirring was continued for 1 hour. Subsequently, the contents of the flask were concentrated under reduced pressure (final reduced pressure = 10 mmHg) to distill off isopropanol and methanol to obtain 80 g of a reaction product, to which 25 g of isopropanol was added. Thus, 105 g of a catalyst (B-1) was obtained as a transparent liquid.

### (Example 1)

To 100 parts by weight of the polymer (A-1) obtained in Synthesis Example 1 was added 1.0 parts by weight of the catalyst (B-1) obtained in Synthesis Example 2, and the polymer (A-1) and the catalyst (B-1) were uniformly mixed. The resulting curable composition was evaluated for curability and storage stability as described below. The results are listed in Table 1.

### (Evaluation of Curability)

In an atmosphere with a temperature of 23°C and a relative humidity of 50%, the polymer (A-1) was weighed into a plastic container, and the curing catalyst was added to give the component proportions as shown in Table 1. The polymer (A-1) and the curing catalyst were then mixed thoroughly by means of Awatori Rentaro. An about 5-mm-thick mold was filled with the mixture by means of a spatula, and the surface of the mixture was flattened. The moment at which the surface flattening was completed was defined as a curing start point. The time taken for the mixture to become non-sticky to the spatula touching the surface of the mixture was determined as the skinning time. In this manner, the curing time (curability) was measured.

### (Evaluation of Storage Stability)

The "storage stability" refers to the viscosity stability of the polymer (A-1) thoroughly mixed with the curing catalyst and hermetically stored in a container filled with nitrogen. The storage stability was quantified and evaluated by procedures described below. In a 23°C environment, the water content of the polymer was adjusted to about 120 ppm, and the viscosity (initial viscosity) of the polymer was measured by means of an E-type viscometer. Subsequently, the polymer was allowed to stand in a 23°C environment for 4 weeks, after which the viscosity (post-storage viscosity) of the polymer placed at 23°C was measured by means of the E-type viscometer. A smaller difference of the post-storage viscosity from the initial viscosity indicates that the storage stability is better, while a greater difference of the post-storage viscosity from the initial viscosity (normally, a greater value of the post-storage viscosity) indicates that the storage stability is worse.

### (Comparative Example 1)

Evaluations were performed in the same manner as in Example 1, except that 1.0 parts by weight of the catalyst (B-1) was replaced with 2.5 parts by weight of dioctyltin/laurylamine. The results are listed in Table 1.

### (Comparative Example 2)

Evaluations were performed in the same manner as in Example 1, except that 1.0 parts by weight of the catalyst (B-1) was replaced with 2.5 parts by weight of TIB KAT K25 (potassium neodecanoate manufactured by TIB Chemicals). The results are listed in Table 1.

**[Table 1]**

| | | | Ex. 1 | Comp. 1 | Comp. 2 |
|---|---|---|---|---|---|
| Polymer | A-1 | | 100 | 100 | 100 |
| | Water content/ppm | | 123 | 123 | 123 |
| Catalyst | Catalyst (B-1) | | 1.0 | | |
| | Dioctyltin/laurylamine | | | 2.5 | |
| | TIB KAT K25 | | | | 2.5 |
| Curability | Skinning time (min) | | 7 | 54 | 33 |
| Storage stability | Before storage | Viscosity-after 30 seconds (Pa•s) | 248.2 | 229 | 323.9 |
| | After storage (at 23°C for 4 weeks) | | 275.9 | Gelation occurred (unmeasurable) | Gelation occurred (unmeasurable) |

As seen from Table 1, the composition of Example 1, which contained the reactive silicon group-containing (meth)acrylic ester polymer (A) and a reaction product of the titanium compound (B) and the ammonium hydroxide (C), cured faster and exhibited better storage stability than the compositions of Comparative Examples 1 and 2 in which catalysts other than the titanium compound (B) and the ammonium hydroxide (C) were used.

## Claims

1. A curable composition comprising a reactive silicon group-containing (meth)acrylic ester polymer (A) having a reactive silicon group represented by the following formula (1):
-Si(R¹)₃₋ₐXₐ (1),
wherein R¹ groups are each independently a hydrocarbon group having 1 to 20 carbon atoms, the hydrocarbon group optionally has a heteroatom-containing group, X groups are each independently a hydroxy group or a hydrolyzable group, and a is 1, 2, or 3,
the curable composition further comprising a titanium compound (B) and an ammonium hydroxide (C) or a reaction product of the titanium compound (B) and the ammonium hydroxide (C), the titanium compound (B) being represented by the following formula (2):
(R²-O)ₙTi-A₄₋ₙ (2),
wherein R² is a substituted or unsubstituted hydrocarbon group having 1 to 10 carbon atoms, n is an integer from 1 to 4, and A is a β-diketone group.

2. The curable composition according to claim 1, wherein a is 2 in the formula (1).

3. The curable composition according to claim 1 or 2, wherein the reactive silicon group is a dimethoxymethylsilyl group.

4. The curable composition according to claim 1 or 2, wherein the (meth)acrylic ester polymer (A) has the reactive silicon group at least at an end of a main chain of the (meth)acrylic ester polymer (A).

5. The curable composition according to claim 1 or 2, further comprising a polymer (D) other than the (meth)acrylic ester polymer (A), the polymer (D) having a reactive silicon group, wherein
a weight percentage of the (meth)acrylic ester polymer (A) in a total weight of the (meth)acrylic ester polymer (A) and the polymer (D) is 50% or more.

6. A cured product resulting from curing of the curable composition according to claim 1 or 2.
